# EUROPEAN PATENT SPECIFICATION

(11) **EP 0 743 013 B1**
(45) Date of publication and mention of the grant of the patent: **05.06.2002**
(21) Application number: 96650016.7
(22) Date of filing: 16.05.1996
(51) Int. Cl.: A23B 4/08, A23B 4/06, A23B 4/24

(54) **A method for processing prawns**
Behandlungsverfahren für Garnelen
Procédé de traitement de crevettes

(30) Priority: 17.05.1995 IE 950355
(43) Date of publication of application: 20.11.1996
(73) Proprietor: HELIX PARK FARM LIMITED, Wexford (IE)
(72) Inventor: Scallan, Alec, County Wexford (IE)
(74) Representative: O'Brien, John Augustine

(56) References cited:
- EP-A- 0 560 509
- WO-A-94/00998
- FR-A- 2 286 606
- US-A- 2 151 967
- US-A- 2 329 472
- US-A- 2 723 645
- US-A- 3 368 366
- US-A- 4 293 578
- PATENT ABSTRACTS OF JAPAN vol. 15, no. 500 (C-0895), 18 December 1991 & JP 03 219833 A (Y.SHIGETO), 27 September 1991,

## Description

The invention relates to a method for processing prawns and in particular for processing fresh whole prawns.

FR-A-2 286 606 discloses a process for conservation of crustaces comprising contacting the crustaces to metabisulfite and producing a single glazing layer.

US-A- 2 723 645 discloses a process for glazing pieces of meat with two glazing layers.

According to the invention, there is provided a method for processing prawns comprising the steps of:-
dipping fresh whole prawns in a preservative liquid;
sorting and grading the dipped prawns;
arranging prawns of a particular grade in an open-topped container;
blast freezing the graded whole prawns in the open-topped container;
first glazing the blast frozen prawns by spraying a first glazing liquid at a temperature of from -3°C to +3°C onto the surface of the prawns in the open-topped container;
freezing the part-glazed prawns;
second glazing the frozen part-glazed prawns by spraying a second glazing liquid at a temperature of from -3°C to +3°C onto the surface of the frozen part-glazed prawns in the open-topped container; and
packaging the container of frozen glazed prawns.

In a particularly preferred embodiment of the invention, the glazing liquid in the first glazing step is delivered onto the prawns to achieve a weight ratio of from 0.5:8 to 1.5:8 of first glazing liquid to whole prawns. Most preferably, the first glazing liquid is delivered onto the prawns to achieve a weight ratio of approximately 1:8.

In a preferred arrangement, the second glazing liquid in the second glazing step is delivered onto the part glazed prawns to achieve a weight ratio of from 0.5:8 to 1.5:8 of second glazing liquid to whole prawns. Most preferably, the second glazing liquid is delivered onto the part glazed prawns to achieve a weight ratio of approximately 1:8.

In a particularly preferred embodiment of the invention, at least one of the glazing liquids includes a polyphosphate-based glazing compound. In this case, preferably the glazing compound is present in the glazing liquid in an amount of from 0.1% to 0.3% by weight, most preferably approximately 0.2% by weight.

In a preferred embodiment of the invention, both glazing liquids include a polyphosphate-based glazing compound.

In a preferred embodiment of the invention, the part glazed prawns are frozen at a temperature of approximately -20° for a period of at least 8 hours prior to second glazing.

Preferably, the prawns are dipped in the preservative for a period of from 7 to 10 minutes.

In a further embodiment of the invention, the preservative is sodium metabisulphite. In this case, the preservative is present in a dipping liquid in an amount of from 2% to 3% by weight of preservative per volume of dipping liquid, most preferably approximately 2.5% w/v.

In one embodiment of the invention, the part glazed prawns are blast frozen in a tunnel freezer at a temperature of no more than -65°C for a period of at least 10 minutes.

In a particularly preferred embodiment of the invention, the prawns are arranged in the open topped container in a generally linear pattern. In this case, most preferably the container includes a plurality of generally parallel rows of linearly arranged whole prawns.

Typically, the frozen glazed prawns are packaged by covering the open-top of the container with a transparent packaging film or a cardboard lid.

The invention also provides prawns whenever processed by the method of the invention.

The invention will be more clearly understood from the following description thereof given by way of example only.

In the method for processing prawns according to the invention, fresh whole prawns are first transferred from fish boxes into dipping baskets which are then dipped in a preservative liquid. The preservative liquid is typically formed by dissolving sodium metabisulphite in water to achieve a concentration of typically 2.5% weight by volume of sodium metabisulphite to water. The prawns are dipped in the preservative liquid thus formed for a period of typically from 7 to 10 minutes to achieve a level of SO₄ of approximately 800 parts per million.

The prawns are removed from the dipping baskets and then sorted and graded into a number of different grades such as the following:-

| **Grade** | **Number of Prawns per Kg** |
|---|---|
| 1 | 4-7 |
| 2 | 8-12 |
| 3 | 13-16 |
| 4 | 17-20 |
| 5 | 21-30 |
| 6 | 31-40 |
| 7 | 41-50 |
| 8 | 51-60 |
| 9 | 61-80 |

After grading, the prawns of a particular grade are arranged in an open-topped container in a generally linear pattern. The prawns are not curled up into a spiral-type shape but are rather laid end-to-end in substantially generally parallel rows of linearly arranged whole prawns which are arranged with their shells uppermost.

The graded whole prawns are then blast frozen by passing the open-topped containers containing the prawns through a tunnel freezer at a temperature of -65°C, for a period of at least 10 minutes, preferably 12 minutes. After blast freezing, the blast frozen prawns are glazed with a first glazing liquid in a first glazing step. The first glazing is achieved by passing the open-top containers containing the blast frozen prawns under two banks each containing double spray nozzles which spray a first glazing liquid onto the surface of the blast frozen prawns in the open-topped container. The glazing liquid is at a temperature of from -3° to +3°C, preferably approximately 1°C and is sprayed at a rate to achieve a weight ratio of first glazing liquid to whole prawns of from 0.5:8 to 1.5:8, most preferably approximately 1:8.

The part glazed prawns from the first glazing step are then frozen in a freezer at a temperature of not less than -20°C for a period for at least 8 hours, most preferably from 12 to 24 hours. After freezing, the frozen part glazed prawns are removed from the freezer and are glazed again in a second glazing step by spraying a second glazing liquid onto the surface of the frozen part-glazed prawns in the open-topped container again from a double bank of twin head spray nozzles. The second glazing liquid is also sprayed at a temperature of from -3°C to +3°C, most preferably approximately +1°C. The second glazing liquid is delivered onto the frozen part glazed prawns to achieve a weight ratio of from 0.5:8 to 1.5:8 of second glazing liquid to whole prawns and most preferably at a rate to achieve a weight ratio of approximately 1:8.

To achieve a particularly transparent glaze the glazing liquid used in one or preferably both glazing steps is substantially demineralised. For example, the glazing liquid is preferably filtered to remove minerals from the liquid.

After glazing, the container of frozen glazed prawns is packaged, typically by covering the open-topped container with a food grade transparent packaging film or a cardboard lid.

Preferably, at least one and ideally both of the glazing liquids contain a glazing compound, especially sodium potassium polyphosphates in an amount of 0.1% to 0.3%, and most preferably approximately 0.2% by weight of the glazing liquid. One such glazing compound is available under the Trade Name Ifisol.

Preferably, the glazing compound is introduced into a tank containing the glazing liquid and the sprayed glazing liquid which does not impinge on the open-topped container containing the blast frozen prawns is recycled.

We have found that by glazing the prawns in two separate stages with an intermediate freezing stage, a highly glazed finished packaged product is achieved. This not only adds to the appearance of the finished product but also, particularly in association with the glazing compound, results in reduced cook-out losses with a more stable product. The prawns processed in this way have a reduced potential to desiccate.

## Claims

1. A method for processing prawns comprising the steps of:-
dipping fresh whole prawns in a preservative liquid;
sorting and grading the dipped prawns;
arranging prawns of a particular grade in an open-topped container;
blast freezing the graded whole prawns in the open-topped container;
first glazing the blast frozen prawns by spraying a first glazing liquid at a temperature of from -3°C to +3°C onto the surface of the prawns in the open-topped container;
freezing the part-glazed prawns;
second glazing the frozen part-glazed prawns by spraying a second glazing liquid at a temperature of from -3°C to +3°C onto the surface of the frozen part-glazed prawns in the open-topped container; and
packaging the container of frozen glazed prawns.

2. A method as claimed in claim 1 wherein the glazing liquid in the first glazing step is delivered onto the prawns to achieve a weight ratio of from 0.5:8 to 1.5:8 of first glazing liquid to whole prawns.

3. A method as claimed in claim 2 wherein the first glazing liquid is delivered onto the prawns to achieve a weight ratio of approximately 1:8.

4. A method as claimed in any of claims 1 to 3 wherein the glazing liquid in the second glazing step is delivered onto the part glazed prawns to achieve a weight ratio of from 0.5:8 to 1.5:8 of second glazing liquid to whole prawns.

5. A method as claimed in claim 4 wherein the second glazing liquid is delivered onto the part glazed prawns to achieve a weight ratio of approximately 1:8.

6. A method as claimed in any preceding claim wherein at least one of the glazing liquids includes a polyphosphate-based glazing compound.

7. A method as claimed in claim 6 wherein the glazing compound is present in the glazing liquid in an amount of from 0.1% to 0.3% by weight.

8. A method as claimed in claim 7 wherein the glazing compound is present in an amount of approximately 0.2% by weight.

9. A method as claimed in any of claims 6 to 8 wherein both glazing liquids include a polyphosphate-based glazing compound.

10. A method as claimed in any preceding claim wherein the part glazed prawns are frozen at a temperature of approximately -20° for a period of at least 8 hours prior to second glazing.

11. A method as claimed in any preceding claim wherein the prawns are dipped in the preservative for a period of from 7 to 10 minutes.

12. A method as claimed in any preceding claim wherein the preservative is sodium metabisulphite.

13. A method as claimed in claim 12 wherein the preservative is present in a dipping liquid in an amount of from 2% to 3% by weight of preservative per volume of dipping liquid.

14. A method as claimed in claim 13 wherein the preservative is present in an amount of approximately 2.5% w/v.

15. A method as claimed in any preceding claim wherein the part glazed prawns are blast frozen in a tunnel freezer at a temperature of no more than -60°C for a period of at least 10 minutes.

16. A method as claimed in any preceding claim wherein the prawns are arranged in the open topped container in a generally linear pattern.

17. A method as claimed in claim 16 wherein the container includes a plurality of generally parallel rows of linearly arranged whole prawns.

18. A method as claimed in any preceding claim wherein the frozen glazed prawns are packaged by covering the open-top of the container with a transparent packaging film.

## Patentansprüche

1. Verfahren zur Verarbeitung von Garnelen, das die folgenden Schritte umfasst:
Eintauchen frischer ganzer Garnelen in eine Konservierungsflüssigkeit;
Sortieren und Klassieren der eingetauchten Garnelen;
Anordnen der Garnelen eines bestimmten Gütegrades in einem offenen (Open-top) Behälter;
Gefrieren durch Überblasen mit Kaltluft der klassierten ganzen Garnelen in dem offenen (Open-top) Behälter;
erstes Glasieren der durch Überblasen mit Kaltluft gefrorenen Garnelen durch Sprühen einer ersten Glasierflüssigkeit bei einer Temperatur von -3 °C bis +3 °C auf die Oberfläche der Garnelen in dem offenen (Open-top) Behälter;
Gefrieren der teilglasierten Garnelen;
zweites Glasieren der gefrorenen teilglasierten Garnelen durch Sprühen einer zweiten Glasierflüssigkeit bei einer Temperatur von -3 °C bis +3 °C auf die Oberfläche der gefrorenen teilglasierten Garnelen in dem offenen (Open-top) Behälter und
Verpacken des Behälters mit gefrorenen glasierten Garnelen.

2. Verfahren nach Anspruch 1, worin die Glasierflüssigkeit in dem ersten Glasierungsschritt auf die Garnelen abgegeben wird, um ein Gewichtsverhältnis von 0,5:8 bis 1,5:8 von erster Glasierflüssigkeit zu ganzen Garnelen zu erlangen.

3. Verfahren nach Anspruch 2, worin die erste Glasierflüssigkeit auf die Garnelen abgegeben wird, um ein Gewichtsverhältnis von ca. 1:8 zu erlangen.

4. Verfahren nach einem der Ansprüche 1 bis 3, worin die Glasierflüssigkeit in dem zweiten Glasierungsschritt auf die teilglasierten Garnelen abgegeben wird, um ein Gewichtsverhältnis von 0,5:8 bis 1,5:8 von zweiter Glasierflüssigkeit zu ganzen Garnelen zu erlangen.

5. Verfahren nach Anspruch 4, worin die zweite Glasierflüssigkeit auf die teilglasierten Garnelen abgegeben wird, um ein Gewichtsverhältnis von ca. 1:8 zu erlangen.

6. Verfahren nach einem der vorangehenden Ansprüche, worin mindestens eine der Glasierflüssigkeiten eine Glasierverbindung auf Polyphosphatbasis einschließt.

7. Verfahren nach Anspruch 6, worin die Glasierverbindung in der Glasierflüssigkeit in einer Menge von 0,1 Gew.-% bis 0,3 Gew.-% vorliegt.

8. Verfahren nach Anspruch 7, worin die Glasierverbindung in einer Menge von ca. 0,2 Gew.-% vorliegt.

9. Verfahren nach einem der Ansprüche 6 bis 8, worin beide Glasierflüssigkeiten eine Glasierverbindung auf Polyphosphatbasis einschließen.

10. Verfahren nach einem der vorangehenden Ansprüche, worin die teilglasierten Garnelen bei einer Temperatur von ca. -20 °C für eine Zeitdauer von mindestens 8 Stunden vor dem zweiten Glasieren gefroren werden.

11. Verfahren nach einem der vorangehenden Ansprüche, worin die Garnelen für eine Zeitdauer von 7 bis 10 Minuten in das Konservierungsmittel eingetaucht werden.

12. Verfahren nach einem der vorangehenden Ansprüche, worin das Konservierungsmittel Natriummetabisulfit ist.

13. Verfahren nach Anspruch 12, worin das Konservierungsmittel in einer Eintauchflüssigkeit in einer Menge von 2 Gew.-% bis 3 Gew.-% Konservierungsmittel pro Volumen Eintauchflüssigkeit vorliegt.

14. Verfahren nach Anspruch 13, worin das Konservierungsmittel in einer Menge von ca. 2,5 Gew./Vol.-% vorliegt.

15. Verfahren nach einem der vorangehenden Ansprüche, worin die teilglasierten Garnelen durch Überblasen mit Kaltluft in einer Tunnelgefrieranlage bei einer Temperatur von nicht mehr als -60 °C für eine Zeitdauer von mindestens 10 Minuten gefroren werden.

16. Verfahren nach einem der vorangehenden Ansprüche, worin die Garnelen in dem offenen (Open-top) Behälter in einem im Allgemeinen linearen Muster angeordnet sind.

17. Verfahren nach Anspruch 16, worin der Behälter eine Vielzahl von im Allgemeinen parallelen Reihen von linear angeordneten ganzen Garnelen einschließt.

18. Verfahren nach einem der vorangehenden Ansprüche, worin die gefrorenen glasierten Garnelen durch Abdecken des offenen (Open-top) Behälters mit einem transparenten Verpackungsfilm verpackt werden.

## Revendications

1. Méthode pour traiter des crevettes comprenant les étapes consistant à :
plonger des crevettes fraîches entières dans un liquide conservateur;
trier et calibrer les crevettes plongées;
arranger les crevettes d'un calibre particulier dans un récipient ouvert sur le dessus;
congeler par soufflage d'air les crevettes entières calibrées dans le récipient ouvert sur le dessus;
appliquer un premier glaçage aux crevettes congelées par soufflage d'air en pulvérisant un premier liquide de glaçage à une température de -3°C à +3°C sur la surface des crevettes dans le récipient ouvert sur le dessus;
congeler les crevettes partiellement glacées;
appliquer un deuxième glaçage aux crevettes congelées partiellement glacées en pulvérisant un deuxième liquide de glaçage à une température de -3°C à +3°C sur la surface des crevettes congelées partiellement glacées dans le récipient ouvert sur le dessus; et
emballer le récipient de crevettes congelées glacées.

2. Méthode tel que revendiquée dans la revendication 1 dans laquelle le liquide de glaçage dans la première étape de glaçage est fourni sur les crevettes pour réaliser un rapport de poids de 0,5:8 à 1,5:8 de premier liquide de glaçage à crevettes entières.

3. Méthode telle que revendiquée dans la revendication 2 dans laquelle le premier liquide de glaçage est fourni sur les crevettes pour réaliser un rapport de poids d'environ 1:8.

4. Méthode telle que revendiquée dans l'une quelconque des revendications 1 à 3 dans laquelle le liquide de glaçage dans la deuxième étape de glaçage est fourni sur les crevettes partiellement glacées pour réaliser un rapport de poids de 0,5:8 à 1,5:8 de deuxième liquide de glaçage à crevettes entières.

5. Méthode telle que revendiquée dans la revendication 4 dans laquelle le deuxième liquide de glaçage est fourni sur les crevettes partiellement glacées pour réaliser un rapport de poids d'environ 1:8.

6. Méthode telle que revendiquée dans l'une quelconque des revendications précédentes dans laquelle au moins l'un des liquides de glaçage inclut un composé de glaçage à base de polyphosphate.

7. Méthode telle que revendiquée dans la revendication 6 dans laquelle le composé de glaçage est présent dans le liquide de glaçage en une quantité de 0,1% à 0,3% en poids.

8. Méthode telle que revendiquée dans la revendication 7 dans laquelle le composé de glaçage est présent en une quantité d'environ 0,2% en poids.

9. Méthode telle que revendiquée dans l'une quelconque des revendications 6 à 8 dans laquelle les deux liquides de glaçage incluent un composé de glaçage à base de polyphosphate.

10. Méthode telle que revendiquée dans l'une quelconque des revendications précédentes dans laquelle les crevettes partiellement glacées sont congelées à une température d'environ -20°C pendant une période d'au moins 8 heures préalablement au deuxième glaçage.

11. Méthode telle que revendiquée dans l'une quelconque des revendications précédentes dans laquelle les crevettes sont plongées dans le conservateur pendant une période de 7 à 10 minutes.

12. Méthode telle que revendiquée dans l'une quelconque des revendications précédentes dans laquelle le conservateur est du métabisulfite de sodium.

13. Méthode telle que revendiquée dans la revendication 12 dans laquelle le conservateur est présent dans un liquide d'immersion en une quantité de 2% à 3% en poids de conservateur par volume de liquide d'immersion.

14. Méthode telle que revendiquée dans la revendication 13 dans laquelle le conservateur est présent en une quantité d'environ 2,5% p/v.

15. Méthode telle que revendiquée dans l'une quelconque des revendications précédentes dans laquelle les crevettes partiellement glacées sont congelées par soufflage d'air dans un tunnel de congélation à une température de pas plus de -60°C pendant une période d'au moins 10 minutes.

16. Méthode telle que revendiquée dans l'une quelconque des revendications précédentes dans laquelle les crevettes sont arrangées dans le récipient ouvert sur le dessus selon une configuration généralement linéaire.

17. Méthode telle que revendiquée dans la revendication 16 dans laquelle le récipient inclut une pluralité de rangées généralement parallèles de crevettes entières arrangées de manière linéaire.

18. Méthode telle que revendiquée dans l'une quelconque des revendications précédentes dans laquelle les crevettes congelées glacées sont emballées en couvrant le dessus ouvert du récipient avec une pellicule d'emballage transparente.
